# FASCICULE DE BREVET EUROPEEN

(11) **EP 3 964 897 B1**
(45) Date de publication et mention de la délivrance du brevet: **03.07.2024**
(21) Numéro de dépôt: 20194269.5
(22) Date de dépôt: 03.09.2020
(51) Int. Cl.: G04C 3/14, G04C 10/00

(54) **PIÈCE D'HORLOGERIE COMPRENANT UNE GÉNÉRATRICE ET PROCÉDÉ DE MONTAGE D'UNE TELLE PIECE D'HORLOGERIE**
UHR, DIE EINEN GENERATOR UMFASST, UND VERFAHREN ZUR MONTAGE EINER SOLCHEN UHR
TIMEPIECE COMPRISING A GENERATOR AND METHOD FOR MOUNTING SUCH A TIMEPIECE

(43) Date de publication de la demande: 09.03.2022
(73) Titulaire: The Swatch Group Research and Development Ltd, 2074 Marin (CH)
(72) Inventeur: MATTHEY, Olivier, 1453 Mauborget (CH); BORN, M. Jean-Jacques, 1110 Morges (CH)
(74) Mandataire: ICB SA

(56) Documents cités:
- EP-A1- 1 109 083
- WO-A1-2015/014288
- CH-A2- 705 231
- GB-A- 1 429 100
- US-A- 6 124 649

## Description

### Domaine technique de l'invention

L'invention concerne le domaine des pièces d'horlogerie qui comprennent une génératrice d'électricité, aussi nommée micro-génératrice, formée d'un rotor à aimants permanents et d'un stator muni de bobines reliées à un circuit électronique de manière à pouvoir alimenter ce dernier.

En particulier, l'invention concerne des mouvements horlogers électromécaniques incorporant une génératrice dont le rotor est en relation d'engrènement avec un rouage agencé entre un barillet, formant une source d'énergie mécanique, et un affichage analogique de l'heure courante.

### Arrière-plan technologique

Un mouvement horloger du type défini ci-dessus est décrit dans le document EP 1 109 083. Ce mouvement horloger est muni d'une génératrice qui génère de l'électricité pour alimenter un circuit de régulation de la vitesse de rotation du rotor de cette génératrice. Comme ce rotor engrène avec le rouage du mouvement horloger, on contrôle ainsi l'avance des indicateurs de l'affichage analogique. Le rotor de la génératrice comprend un pignon sur son arbre qui engrène avec un mobile du rouage. Ce rotor est monté dans une structure porteuse du mouvement horloger de la même manière qu'un autre mobile du rouage, à savoir entre une platine et un pont, et il comprend deux flasques, portant des aimants, entre lesquels sont situées partiellement les bobines du stator. De ce fait, lorsque le rotor est monté premièrement dans la structure porteuse avec les autres mobiles du rouage, il est nécessaire d'introduire ensuite latéralement les bobines dans la structure porteuse horloger, c'est-à-dire perpendiculairement à l'axe de rotation / l'arbre central du rotor.

Comme indiqué dans le document susmentionné, il est important que la génératrice puisse fournir une tension redressée ayant, pour le rotor prévu, la plus grande valeur possible. A cet effet, il est avantageux que les bobines puissent être placées au mieux entre les aimants pour obtenir la plus grande tension induite possible dans les bobines. Ceci est réalisé en sélectionnant, en fonction de la position radiale des aimants du rotor, le plus grand diamètre utile possible pour les bobines. Pour obtenir un tel résultat, il est généralement nécessaire que chacune des bobines puisse pénétrer entre les flasques du rotor au plus proche de l'arbre central du rotor. Ainsi, il est donc avantageux que toutes les bobines soient situées à une même distance de l'axe de rotation du rotor, de sorte que chacune d'elle fournisse une tension induite de sensiblement même intensité. On remarquera que les génératrices horlogères présentent généralement deux ou trois bobines pour six aimants bipolaires, à aimantation axiale et polarité alternée, agencés circulairement et régulièrement sur chacun des deux flasques, les bobines présentant entre elles un angle au centre de 120°. Cette configuration s'est révélée optimale pour les dimensions des génératrices horlogères de sorte à obtenir une tension induite relativement grande dans les bobines tout en permettant, dans le cas d'un stator à deux bobines, un agencement favorable du stator dans le mouvement horloger. Un rotor avec quatre ou huit aimants par flasque requière des bobines décalées angulairement de 90° ou 180°. Deux bobines décalées de 90° sont fortement limitées dans le diamètre utile qu'elles peuvent avoir et un décalage de 180° entre celles-ci complique l'agencement du stator dans le mouvement horloger et pose généralement un problème d'encombrement plus important.

Le document EP 1 109 083 propose, en référence aux figures 3 et 4, un stator à trois bobines formant un module distinct, lequel est monté comme un tiroir dans un espace de la structure porteuse définissant une coulisse pour ce module distinct. En règle générale, le module distinct supporte aussi le circuit électronique de régulation ; on le nommera donc par la suite 'module électronique'. Ainsi, pour assembler le stator avec le rotor, ce dernier étant monté au préalable dans la structure porteuse du mouvement horloger lors de l'assemblage du rouage avec cette structure porteuse, le module électronique est introduit dans la coulisse et glissé dans cette coulisse jusqu'à ce que les bobines soient en place autour de l'arbre du rotor et partiellement entre les deux flasques du rotor. La technique proposée consiste donc à glisser latéralement dans une coulisse, selon un axe linéaire défini par la coulisse, le module électronique dans la structure porteuse. Cette technique comporte plusieurs inconvénients. Premièrement l'agencement du mouvement est conditionné par le fait que l'axe de coulissement doit être médian entre deux bobines. Ensuite, comme deux bobines sont introduites au-delà de l'arbre du rotor, il faut un écartement entre ces deux bobines au minimum égal au diamètre de l'arbre du rotor.

D'autres inconvénients sont encore à relever. Si on élimine une des trois bobines pour diminuer l'encombrement et si on souhaite maximiser la tension induite dans les deux bobines restante en permettant que leur pourtour soit à faible distance de l'arbre (distance minimale fonctionnelle au vu des tolérances de fabrication), il faut prévoir un jeu latéral relativement important dans la coulisse pour permettre à la bobine dont le centre est à l'arrière de l'arbre du rotor de contourner l'arbre du rotor. Un tel jeu latéral enlève en partie l'intérêt de la coulisse et il engendre un problème pour la fixation du module électronique telle qu'elle est prévue, c'est-à-dire au moyen de vis, car il est alors difficile de bien aligner les trous prévus dans un support du module électronique pour le passage des vis et des trous filetés respectifs prévus dans la platine. On remarquera que la fixation du module électronique par des vis dont les têtes sont prévues du côté du pont supérieur de la structure porteuse requière que ce pont supérieur présente des ouvertures à cet effet ou un profil extérieur ne recouvrant pas les zones de fixation prévues. Ainsi, le support du module électronique est partiellement visible du côté de ce pont supérieur, ce qui peut être un inconvénient pour un mouvement horloger du type mécanique que l'on peut laisser apparaître par un fond vitré de la boîte de montre incorporant ce mouvement. Finalement, l'agencement d'une coulisse dans la structure porteuse demande une platine présentant dans la coulisse une surface plane ayant une étendue suffisante pour bien guider le module électronique lors de son montage. Pour que les bobines soient bien centrées entre les deux flasques, le rotor doit présenter un positionnement axial précis relativement à une telle surface plane.

Le document EP 1 109 083 propose aussi, en référence aux figures 5 et 6, une génératrice horlogère comportant un substrat, constitué de deux plaques dont l'une supporte une bobine et l'autre supporte deux bobines. Dans cette réalisation, un réglage de l'amplitude de la tension induite aux bornes de ladite bobine est effectué par une rotation de la première plaque qui supporte cette bobine. La deuxième plaque reste fixe par rapport au corps de la montre. Dans la première plaque, un trou oblong et curviligne est réalisé, l'arc défini par ce trou oblong étant centré sur l'axe d'une vis de fixation de cette première plaque, cette vis de fixation définissant un axe de rotation pour la première plaque lors dudit réglage. Dans le trou oblong est agencée une autre vis de fixation de la première plaque.

### Résumé de l'invention

L'invention a pour objectif de pallier aux moins certains des inconvénients de la pièce d'horlogerie incorporant une génératrice selon l'art antérieur décrite ci-avant, en fournissant une pièce d'horlogerie incorporant une génératrice et agencée de manière à permettre un montage d'un module électronique, comprenant les bobines de la génératrice, dans une structure porteuse, laquelle est préassemblée avec le rotor de cette génératrice, qui est aisé, efficace et précis. L'invention propose aussi un procédé de montage d'une génératrice dans une pièce d'horlogerie.

L'invention est définie dans la revendication indépendante 1 annexée et, dans des réalisations préférées, dans les revendications dépendantes 2 à 4. Elle concerne ainsi une pièce d'horlogerie comprenant une structure porteuse et une génératrice formée d'un rotor, muni d'au moins un aimant et monté pivotant dans la structure porteuse, et d'un stator composé de deux bobines et formant, avec un circuit électronique, un module électronique qui est agencé de manière à pouvoir être monté dans la structure porteuse ultérieurement au montage de la structure porteuse avec le rotor pivoté dans celle-ci. Le module électronique comprend un support des deux bobines présentant une première partie formant une articulation avec un premier élément de la structure porteuse, la première partie et le premier élément étant agencés de manière que cette première partie ou/et ce premier élément puisse/nt subir une déformation élastique permettant de les assembler, de manière amovible, pour former ladite articulation en introduisant latéralement par pression la première partie dans le premier élément ou le premier élément dans la première partie. La pièce d'horlogerie est agencée de sorte que, lors d'un montage latéral du module électronique préformé dans la structure porteuse préassemblée avec le rotor, la première partie et le premier élément peuvent être assemblés pour former l'articulation, laquelle permet ensuite une rotation du module électronique, autour d'un axe de rotation défini par cette articulation et parallèle à un axe de rotation du rotor, depuis une première position angulaire, dans laquelle se trouve ce module électronique directement après la formation de l'articulation, à une seconde position angulaire pour approcher au moins une des deux bobines de l'axe de rotation du rotor, de sorte que ces deux bobines sont situées finalement chacune dans une position fonctionnelle sensiblement à une même distance de l'axe de rotation du rotor, le module électronique étant maintenu dans la seconde position angulaire par un système de fixation qui est agencé pour pouvoir bloquer l'articulation dans cette seconde position angulaire.

Selon une variante avantageuse, le système de fixation est formé par une deuxième partie du support et un deuxième élément de la structure porteuse qui sont agencés pour pouvoir être assemblés par une pression appliquée au module électronique lors d'une rotation de ce module électronique, autour de l'axe de rotation défini par l'articulation et en direction de ladite seconde position angulaire, intervenant lors du montage latéral du module électronique dans la structure porteuse, la deuxième partie et le deuxième élément étant agencés de manière que cette deuxième partie ou/et ce deuxième élément puisse/nt subir une déformation élastique permettant de les assembler, de manière amovible, en introduisant par pression le deuxième élément dans la deuxième partie ou la deuxième partie dans le deuxième élément.

L'invention concerne aussi un procédé de montage tel que défini dans la revendication indépendante 5 annexée et, dans des réalisations préférées, dans les revendications dépendantes 6 à 8.

### Brève description des figures

L'invention sera décrite ci-après de manière détaillée à l'aide des dessins annexés, donnés à titre d'exemples nullement limitatifs, dans lesquels :
- La Figure 1 montre schématiquement et en partie un mouvement horloger selon un mode de réalisation principal de l'invention,
- La Figure 2 montre, partiellement de manière schématique, une coupe au travers du mouvement horloger selon le mode de réalisation principal de l'invention,
- La Figure 3 est une vue latérale d'une structure porteuse d'un module réglant du mouvement horloger de la Figure 2,
- La Figure 4 est une vue en perspective d'un module électronique formant en partie le module réglant,
- La Figure 5 est une vue en perspective du module réglant avec le pont supérieur représenté en transparence,
- Les Figures 6 à 9 montre quatre étapes successives de l'assemblage du module électronique dans la structure porteuse pour former le module réglant.

### Description détaillée de l'invention

En référence aux figures annexées, on décrira ci-après un mouvement horloger selon un mode de réalisation principal de l'invention et un procédé d'assemblage de son système réglant comportant une génératrice à aimants permanents, plus particulièrement un procédé de montage de cette génératrice.

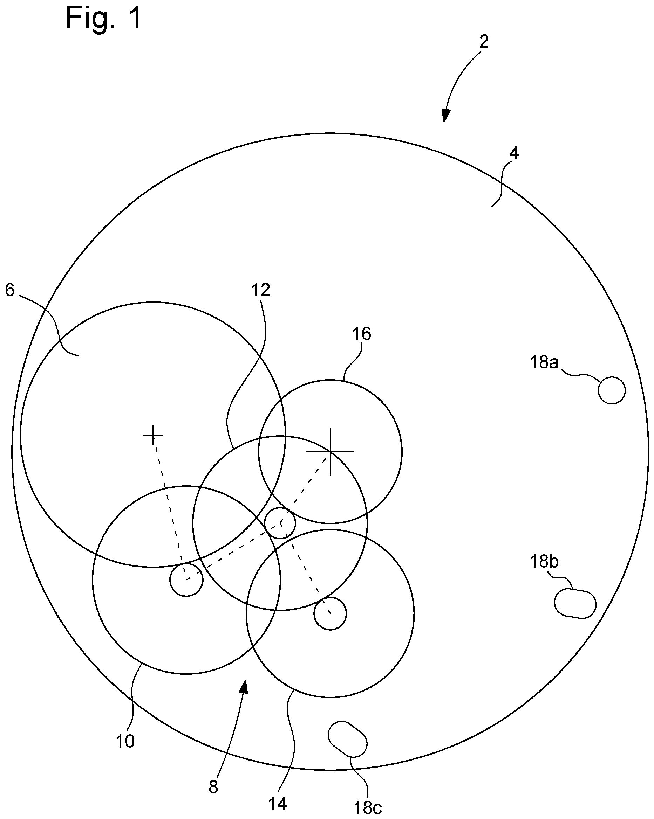

La Figure 1 montre schématiquement et partiellement un mouvement horloger 2 qui se caractérise par une source d'énergie mécanique classique formée par un barillet 6 monté sur une platine 4, par un affichage analogique (non représenté) qui est entraîné par un rouage 8 lui-même entraîné par le barillet, et par un système réglant, formé par une génératrice et un circuit électronique de régulation de sa vitesse de rotation, qui sera décrit par la suite. Dans l'exemple représenté, le rouage 8 comprend un mobile de grande moyenne 10, un mobile de moyenne 12 dont le pignon engrène avec une roue centrale de minute 16 et dont la roue engrène avec un mobile de seconde 14 pouvant porter une petite aiguille des secondes positionnée à '6 heures'. De manière classique, la roue centrale de minute 16 entraîne via un couplage à friction (pour permettre une mise à l'heure) une minuterie portant une aiguille des minutes et une aiguille des heures.

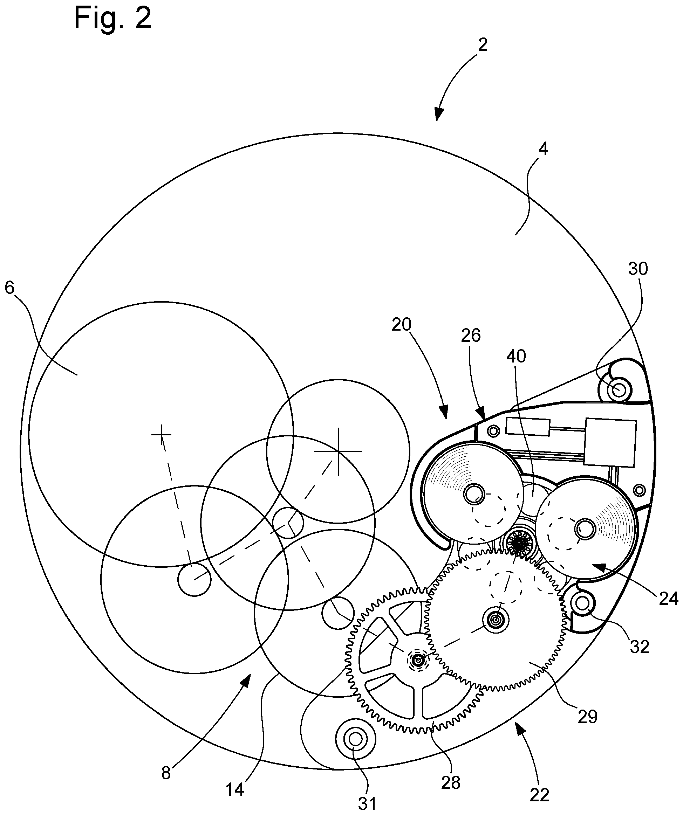

A la Figure 2 est représenté le mouvement horloger 2 avec un système réglant qui est formé par un module réglant 20 monté sur la platine 4 et fixé à celle-ci par trois vis (non représentées) qui sont vissées depuis le dessous de la platine dans les trous filetés de trois piliers 30, 31 et 32 d'une structure porteuse 22 formant le module réglant. On notera que les filetages peuvent être au niveau des piliers et/ou de tubes inférieurs qui prolongent ces piliers en traversant des trous respectifs d'un plateau 34, dans lesquels ils sont chassés (alternativement collés ou soudés, éventuellement après chassage), et en pénétrant dans des trous respectifs 18a, 18b et 18c de la platine (voir Fig.1). D'autres moyens de fixation du module réglant à la platine peuvent être prévus, notamment une fixation par chassage, par collage ou par soudage. On notera que la variante représentée et décrite prévoit que le système réglant soit sous la forme d'un module qui peut être entièrement assemblé avant d'être monté sur la platine du mouvement horloger. Ceci est une variante avantageuse mais nullement limitative pour l'invention, comme ceci ressortira par la suite de la description.

En référence aux Figures 2 à 5, on décrira plus en détails le module réglant 20 qui comprend : - une structure porteuse 22, formée par un plateau 34, trois piliers 30, 31 et 32, et un pont 36 ; - une génératrice 24 qui est formée par un rotor 38, monté entre le plateau et le pont dans lesquels il est pivoté, et un stator comprenant deux bobines identiques 52 et 54 ; - un circuit électronique 56 agencé sur un support 50 et relié aux deux bobines qui sont portées le support ; - deux mobiles 28 et 29 dont le pignon de la première engrène avec la roue du mobile de seconde 14 et dont la roue de seconde engrène avec un pignon 42 du rotor de la génératrice, permettant au rotor d'effectuer plusieurs tours par seconde, par exemple environ 64/9 tours/s. Le rotor 38 présente un axe de rotation 72. Pour pouvoir régler précisément la pénétration de la denture de la roue du mobile de seconde dans la denture du pignon du premier mobile 28, les trous 18b et 18c dans la platine 4 sont prévus oblongs de sorte que le module réglant 20 peut être légèrement tourné à cet effet autour d'un axe de rotation défini par le tube inférieur prolongeant le pilier 31 et inséré dans le trou circulaire 18a.

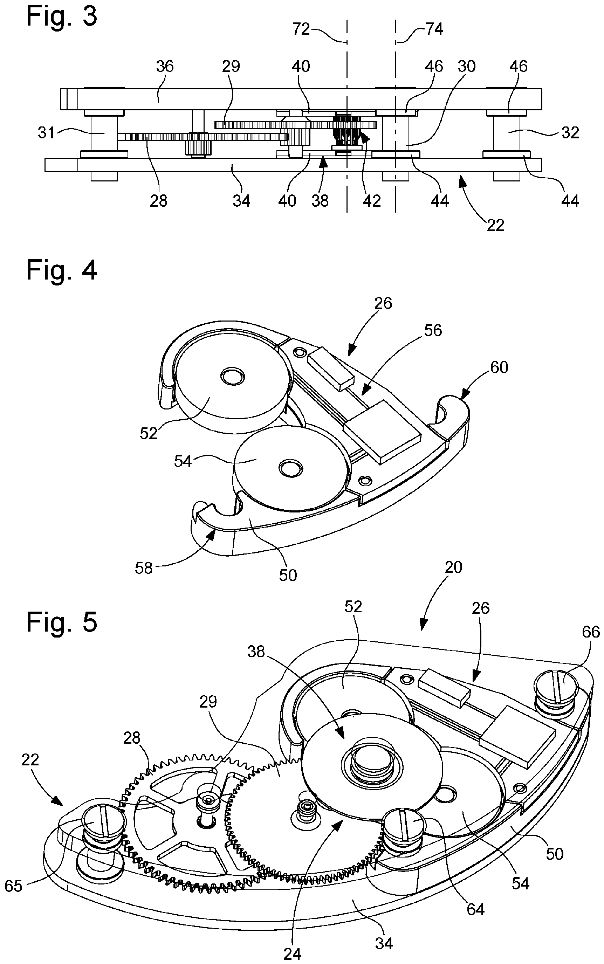

Selon l'invention, le module réglant 20 comprend deux parties distinctes : - une partie mécanique incorporant le rotor 38 de la génératrice 24, et - un module électronique 26 incorporant les deux bobines identiques 52, 54 de cette génératrice. Ces deux parties distinctes sont agencées pour pouvoir être chacune assemblées, chacune dans une étape préliminaire, avant un assemblage terminal du module électronique 26 avec la partie mécanique du module réglant, selon un procédé de l'invention qui sera décrit par la suite, pour former entièrement ce module réglant. De manière plus générale, lorsque le système réglant n'est pas prévu sous forme de module, l'invention fournit un module électronique, semblable au module électronique 26, qui est distinct de la partie mécanique du mouvement horloger incorporant le rotor 38 de la génératrice et qui est agencé pour pouvoir être monté latéralement dans cette partie mécanique après l'assemblage de celle-ci dans une étape préliminaire. De préférence, le module électronique peut aussi être dissocié par la suite de la structure porteuse sans nécessiter un démontage de la partie mécanique. Le module électronique 26, représenté en perspective à la Figure 4, comprend un support 50 sur lequel sont agencés les deux bobines de la génératrice et le circuit électronique 56 de régulation de la vitesse de rotation de cette génératrice. La partie mécanique du module réglant comprend la structure porteuse 22, les deux mobiles 28, 29 et le rotor 38 de la génératrice qui sont montés pivotant dans la structure porteuse pour former la partie mécanique avant un assemblage terminal de cette partie mécanique avec le module électronique. Le rotor 38 de la génératrice 24 comprend deux disques portant chacun des aimants 40 du côté d'un espace intérieur défini par ces deux disques et dans lequel pénètrent les deux bobines 52 et 54 de sorte que les aimants passent au-dessus et en-dessous des bobines lorsque le rotor tourne. On remarquera que dans une variante de génératrice, seul un des deux disques est muni d'aimants permanent.

Les trois piliers 30, 31 et 32, reliant fixement le plateau 34 au pont 36 tout en les maintenant à une certaine distance l'un de l'autre, présentent chacun à ses deux extrémités un épaulement inférieur 44 et un épaulement supérieur 46. L'épaulement inférieur sert de butée lors du montage des piliers dans le plateau 34. Dans une variante, les épaulements inférieurs des piliers 30 et 32 forment aussi une butée inférieure pour le support 50 du module électronique 26 et ainsi participer au positionnement en hauteur de ce module électronique. Si tel n'est pas le cas, alors le support 50, une fois le module électronique assemblé à la structure porteuse, repose sur le plateau 34 dont la surface supérieure définit alors une butée inférieure pour le module électronique. Les épaulements supérieurs 46 des trois piliers servent de butées pour le pont 36 qui est pressé contre ces butées par trois vis 64, 65 et 66 servant à fixer le pont au reste de la structure porteuse. Dans une variante, les épaulements supérieurs des piliers 30 et 32 forment aussi une butée supérieure pour le support 50. Dans la mesure où la distance entre l'épaulement inférieur et l'épaulement supérieur correspond à la hauteur du support 50, plus particulièrement de ses deux parties de fixation 58 et 60, ces deux épaulements permettent de déterminer une position axiale précise pour le module électronique et plus particulièrement pour les deux bobines 52, 54, de sorte que ces dernières soient correctement centrées entre les aimants 40 du rotor 38. De préférence, pour maintenir les bobines dans une position axiale (selon l'axe de rotation du rotor), une vis de fixation du support 50 au plateau 34 est prévue en sus. Dans la variante représentée où le support 50 repose sur le plateau 34, cette vis de fixation additionnelle sert à plaquer ce support contre le plateau. Dans une autre variante où la position axiale du module électronique est déterminée par les épaulements inférieurs et supérieurs des piliers 30 et 32, la vis de fixation additionnelle est visée par exemple depuis le dessous de la platine 4 au travers d'un trou non fileté usiné dans cette platine et une rondelle élastique d'écartement est agencée entre la platine et le support, permettant ainsi de régler précisément la distance entre le plateau et le support du module électronique via cette vis de fixation.

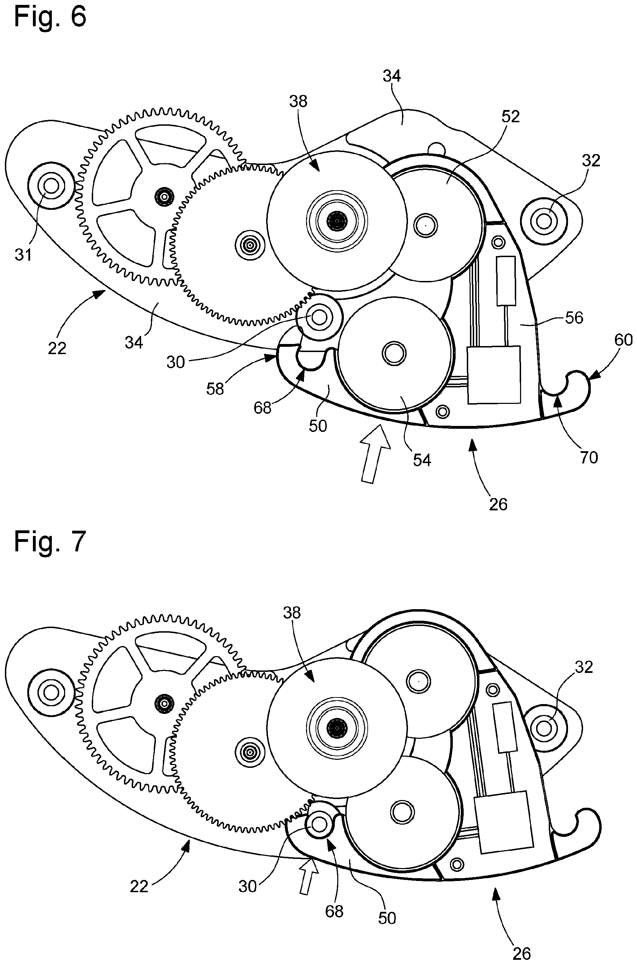

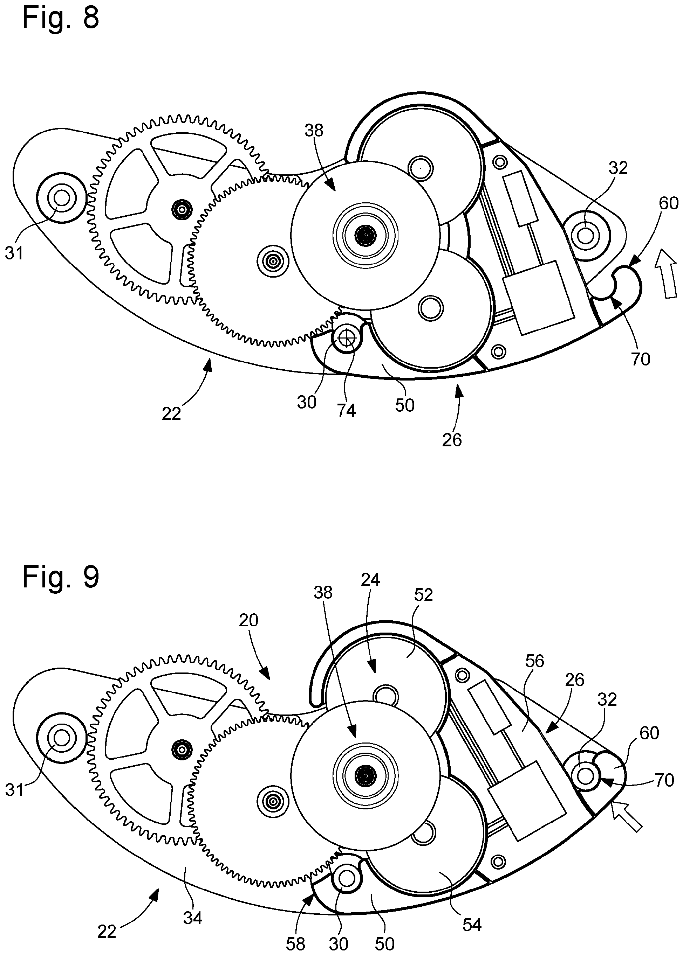

En référence aux Figures 6 à 9, on décrira plus précisément un mode de mise en oeuvre du procédé de montage d'une génératrice dans une pièce d'horlogerie selon l'invention, cette génératrice étant formée d'un rotor muni au moins d'un aimant permanent et de deux bobines. Dans une première étape préliminaire, une partie mécanique d'un module réglant 20, déjà décrite, est préassemblé avec le rotor 38 de la génératrice 24 monté dans une structure porteuse 22. Dans une deuxième étape préliminaire, un module électronique 26, déjà décrit et comprenant un support 50, les deux bobines et un circuit électronique 56, est préformé. Le support 50 présente une première partie 58, d'un premier côté du support relativement à un plan comprenant les axes centraux des deux bobines, qui est configurée de manière à pouvoir former une articulation avec un premier élément 30 de la structure porteuse. De manière générale, le procédé selon l'invention comprend les étapes suivantes pour monter latéralement le module électronique dans la partie mécanique du module réglant, ou du mouvement horloger, de sorte à former la génératrice :
- Assemblage de la première partie 58 du support et du premier élément 30 de la structure porteuse pour former l'articulation (Figures 6 et 7) ; ensuite
- Rotation du module électronique 26 (Figure 8), autour d'un axe de rotation 74 défini par l'articulation et parallèle à un axe de rotation 72 du rotor, depuis une première position angulaire (Figure 7), dans laquelle se trouve ce module électronique directement après la formation de l'articulation, à une seconde position angulaire (Figure 9) pour approcher au moins une des deux bobines de l'axe de rotation du rotor, de sorte que ces deux bobines sont, dans la seconde position angulaire, situées chacune dans une position fonctionnelle sensiblement à une même distance de l'axe de rotation 72 du rotor ;
- Fixation du module électronique 26 par un système de fixation qui est agencé pour pouvoir bloquer l'articulation dans la seconde position angulaire (Figure 9) et ainsi maintenir ce module électronique dans cette seconde position angulaire.

Dans le mode de mise en oeuvre décrit à l'aide des figures, l'étape d'assemblage est précédée par une étape d'introduction latérale du module électronique dans la partie mécanique du module réglant, plus précisément dans la structure porteuse 22 entre le plateau 34 et le pont 36, par un mouvement linéaire ou curviligne (Figure 6) permettant à la première bobine, ayant pénétré en premier dans la structure porteuse, d'éviter l'arbre du rotor, en particulier le pignon 42 formant cet arbre, en pénétrant au-delà de cet arbre dans la partie mécanique et permettant à la première partie 58 du support de s'approcher d'un premier pilier 30 de la structure porteuse de manière à pouvoir finalement entrer en contact avec ce premier pilier et être assemblé à celui-ci pour former une articulation (Figure 7). Le premier pilier est cylindrique et la première partie 58 présente une cavité circulaire 68 dont la paroi cylindrique s'étend sur plus de 180°, cette cavité circulaire étant dimensionnée pour pouvoir recevoir le premier pilier.

Dans la variante avantageuse décrite, la première partie 58 et le premier pilier 30 sont assemblés en introduisant le premier pilier par pression dans la première partie (Figure 7), c'est-à-dire par l'ouverture de la cavité circulaire en agrandissant élastiquement par pression cette ouverture lors de l'introduction du premier pilier dans la cavité circulaire, de sorte à former l'articulation. La première partie 58 du support présente donc une capacité de déformation élastique permettant de l'assembler par pression, de manière amovible, au premier pilier 30 pour obtenir une articulation dont l'axe de rotation 74 correspond à l'axe central du premier pilier 30. Dans une autre variante, il est prévu une inversion dans la configuration de l'articulation avec une première partie du support du module électronique définissant une partie cylindrique sur plus de 180° et un premier élément de la structure porteuse présentant une cavité circulaire ayant une paroi cylindrique s'étendant sur plus de 180° et présentant une capacité de déformation élastique qui permette de l'assembler par pression, de manière amovible, à la première partie pour obtenir une articulation dont l'axe de rotation est défini par un axe central de la cavité.

Dans la variante avantageuse décrite, le système de fixation, permettant de bloquer l'articulation dans ladite seconde position angulaire au terme d'une rotation du module électronique (Figure 8) effectuée grâce à l'articulation formée au préalable, est semblable au système de formation de l'articulation. Ce système de fixation est formé par une deuxième partie 60 du support 50, agencée d'un second côté du support relativement au plan comprenant les axes centraux des deux bobines, et un deuxième pilier 32 de la structure porteuse qui sont assemblés par une pression appliquée au module électronique lors de la rotation de ce module électronique, autour de l'axe de rotation 74 défini par l'articulation, en direction de la seconde position angulaire (Figure 9). La deuxième partie 60 et le deuxième pilier 32 sont agencés de manière que cette deuxième partie puisse subir une déformation élastique permettant de les assembler, de manière amovible, en introduisant par pression le deuxième pilier 32 dans la deuxième partie 60 qui définit une cavité circulaire dont la paroi cylindrique s'étend sur plus de 180°. Dans une autre variante, il est prévu une inversion dans la configuration du système de fixation avec une deuxième partie du support du module électronique définissant une partie cylindrique sur plus de 180° et un deuxième élément de la structure porteuse présentant une cavité circulaire ayant une paroi cylindrique qui s'étend sur plus de 180° et présente une capacité de déformation élastique permettant de l'assembler par pression, de manière amovible, à la deuxième partie pour bloquer l'articulation et maintenir le module électronique dans la seconde position angulaire. On notera que dans une alternative, c'est la partie cylindrique qui présente une capacité de déformation élastique, par exemple en réalisant cette partie cylindrique avec une fente, dans un plan contenant l'axe central de cette partie cylindrique, sur la majeure partie de son diamètre. On remarquera que, étant donné que le système de fixation sert à bloquer l'articulation et fixer le module électronique en association avec l'articulation, il n'est pas nécessaire qu'il forme une articulation de sorte qu'il n'a nul besoin d'être formé d'une partie et d'un élément au moins partiellement cylindriques.

Dans une variante avantageuse, une fois l'articulation formée et ensuite bloquée dans la seconde position angulaire par le système de fixation, une position axiale finale du module électronique 26 est assurée par un dispositif additionnel de fixation de ce module électronique à la structure porteuse, en particulier par une vis de fixation pouvant être vissée depuis le dessous du plateau 34 dans le support 50, comme déjà exposé précédemment, ou alternativement depuis le dessus du module électronique dans le plateau 34 ou encore depuis le dessus du pont 36 dans le support.

## Revendications

1. Pièce d'horlogerie (2) comprenant une structure porteuse (22) et une génératrice (24) formée d'un rotor (38), muni d'au moins un aimant (40) et monté pivotant dans la structure porteuse, et d'un stator composé de deux bobines (52, 54) et formant, avec un circuit électronique (56), un module électronique (26) qui est agencé de manière à pouvoir être monté dans la structure porteuse ultérieurement au montage de la structure porteuse avec le rotor pivoté dans celle-ci, le module électronique comprenant un support (50) des deux bobines présentant une première partie (58) formant une articulation avec un premier élément (30) de la structure porteuse, la première partie et le premier élément étant agencés de manière que cette première partie ou/et ce premier élément puisse/nt subir une déformation élastique permettant de les assembler, de manière amovible, pour former ladite articulation en introduisant latéralement par pression la première partie dans le premier élément ou le premier élément dans la première partie ; la pièce d'horlogerie étant agencée de sorte que, lors d'un montage latéral du module électronique dans la structure porteuse préassemblée avec le rotor, la première partie et le premier élément peuvent être assemblés pour former ladite articulation, laquelle permet ensuite une rotation du module électronique (26), autour d'un axe de rotation (74) défini par cette articulation et parallèle à un axe de rotation (72) du rotor, depuis une première position angulaire, dans laquelle se trouve ce module électronique directement après la formation de l'articulation, à une seconde position angulaire pour approcher au moins une des deux bobines de l'axe de rotation du rotor, de sorte que ces deux bobines sont situées chacune dans une position fonctionnelle sensiblement à une même distance de l'axe de rotation du rotor, le module électronique étant maintenu dans la seconde position angulaire par un système de fixation (32, 60, 70) qui est agencé pour pouvoir bloquer l'articulation dans cette seconde position angulaire.

2. Pièce d'horlogerie selon la revendication 1, **caractérisée en ce que** ledit système de fixation est formé par une deuxième partie (60) dudit support et un deuxième élément (32) de ladite structure porteuse (22) qui sont agencés pour pouvoir être assemblés par une pression appliquée au module électronique (26) lors d'une rotation de ce module électronique, autour dudit axe de rotation défini par l'articulation et en direction de ladite seconde position angulaire, intervenant lors du montage latéral du module électronique dans la structure porteuse, ladite deuxième partie et ledit deuxième élément étant agencés de manière que cette deuxième partie ou/et ce deuxième élément puisse/nt subir une déformation élastique permettant de les assembler, de manière amovible, en introduisant par pression le deuxième élément dans la deuxième partie ou la deuxième partie dans le deuxième élément.

3. Pièce d'horlogerie selon la revendication 1 ou 2, **caractérisée en ce que** ladite articulation ou/et ledit système de fixation est/sont agencé/s de manière à déterminer une position axiale dans laquelle le module électronique (26) est positionné en hauteur, une fois l'articulation formée et ensuite bloquée dans la seconde position angulaire par le système de fixation.

4. Pièce d'horlogerie selon une quelconque des revendications précédentes, **caractérisée en ce que**, une fois l'articulation formée et ensuite bloquée dans la seconde position angulaire par le système de fixation, une position axiale finale des deux bobines (53, 54) est assurée par un dispositif de fixation additionnel prévu pour fixer le module électronique à la structure porteuse.

5. Procédé de montage de la pièce d'horlogerie (2) selon une quelconque des revendications précédentes, le procédé comprenant les étapes successives suivantes pour monter latéralement le module électronique dans la structure porteuse de sorte à former la génératrice :
- Introduction latérale partielle du module électronique (26) dans la structure porteuse de manière qu'une partie du module électronique, éloignée de la première partie, évite un arbre du rotor en passant sur le côté de cet arbre ;
- assemblage de la première partie du support et du premier élément de la structure porteuse pour former l'articulation ;
- rotation du module électronique, autour d'un axe de rotation (74) défini par l'articulation et parallèle à un axe de rotation (72) du rotor, depuis une première position angulaire, dans laquelle se trouve ce module électronique directement après la formation de l'articulation, à une seconde position angulaire pour approcher au moins une des deux bobines de l'axe de rotation du rotor, de sorte que ces deux bobines sont situées, dans la seconde position, chacune dans une position fonctionnelle sensiblement à une même distance de l'axe de rotation du rotor ;
- fixation du module électronique par un système de fixation qui est agencé pour pouvoir bloquer l'articulation dans la seconde position angulaire et ainsi maintenir ce module électronique dans cette seconde position angulaire.

6. Procédé selon la revendication 5, **caractérisé en ce que** ladite première partie (58) et ledit premier élément (30) sont assemblés en introduisant latéralement par pression le premier élément dans la première partie ou la première partie dans le premier élément de sorte à former ladite articulation, la première partie ou/et le premier élément présentant une capacité de déformation élastique permettant de les assembler par pression de manière amovible.

7. Procédé selon la revendication 5 ou 6, **caractérisé en ce que** le système de fixation est formé par une deuxième partie (60) dudit support (50) et un deuxième élément (32) de ladite structure porteuse (22) qui sont assemblés par une pression appliquée au module électronique (26) lors de la rotation de ce module électronique, autour dudit axe de rotation (74) défini par l'articulation, en direction de ladite seconde position angulaire, la deuxième partie et le deuxième élément étant agencés de manière que cette deuxième partie ou/et ce deuxième élément puisse/nt subir une déformation élastique permettant de les assembler, de manière amovible, en introduisant par pression le deuxième élément dans la deuxième partie ou la deuxième partie dans le deuxième élément.

8. Procédé selon une quelconque des revendications 5 à 7, **caractérisé en ce que**, une fois l'articulation formée et ensuite bloquée dans la seconde position angulaire par le système de fixation, une position axiale finale du module électronique (26) est assurée par un dispositif additionnel de fixation de ce module électronique à la structure porteuse.

## Patentansprüche

1. Uhrmachereistück (2), das eine Trägerstruktur (22) und einen Generator (24) umfasst, der aus einem Rotor (38), der mit mindestens einem Magneten (40) versehen, und drehbar in der Trägerstruktur montiert ist, und einem Stator gebildet wird, der aus zwei Spulen (52, 54) besteht, und mit einer elektronischen Schaltung (56) ein elektronisches Modul (26) bildet, das angeordnet ist, um später bei der Montage der Trägerstruktur mit dem darin gedrehten Rotor in der Trägerstruktur montiert werden zu können, wobei das elektronische Modul eine Stütze (50) der beiden Spulen umfasst, die einen ersten Teil (58) aufweist, der ein Gelenk mit einem ersten Element (30) der Trägerstruktur bildet, wobei der erste Teil und das erste Element angeordnet sind, sodass dieser erste Teil oder/und dieses erste Element eine elastische Verformung erfahren kann/können, die es ermöglicht, sie lösbar zusammenzubauen, um das Gelenk zu bilden, indem der erste Teil seitlich durch Druck in das erste Element, oder das erste Element in den ersten Teil eingeführt wird; wobei das Uhrmachereistück angeordnet ist, sodass bei einer seitlichen Montage des elektronischen Moduls in der mit dem Rotor vorab zusammengebauten Trägerstruktur der erste Teil und das erste Element zusammengebaut werden können, um das Gelenk zu bilden, welches danach eine Drehung des elektronischen Moduls (26) um eine durch dieses Gelenk definierte, und zu einer Drehachse (72) des Rotors parallelen Drehachse (74) aus einer ersten Winkelposition, in der sich dieses elektronische Modul direkt nach dem Bilden des Gelenks befindet, in eine zweite Winkelposition ermöglicht, um sich mindestens einer der beiden Spulen der Drehachse des Rotors anzunähern, sodass sich diese beiden Spulen jeweils in einer im Wesentlichen im gleichen Abstand von der Drehachse des Rotors befindlichen Funktionsposition befinden, wobei das elektronische Modul durch ein Befestigungssystem (32, 60, 70) in der zweiten Winkelposition gehalten wird, das angeordnet ist, um das Gelenk in dieser zweiten Winkelposition blockieren zu können.

2. Uhrmachereistück nach Anspruch 1, **dadurch gekennzeichnet, dass** das Befestigungssystem aus einem zweiten Teil (60) der Stütze und einem zweiten Element (32) der Trägerstruktur (22) gebildet wird, die angeordnet sind, um durch einen Druck, der bei einer Drehung dieses elektronischen Moduls um die durch das Gelenk definierte Drehachse und in Richtung der zweiten Winkelposition auf das elektronische Modul (26) ausgeübt wird, zusammengebaut werden zu können, der bei der seitlichen Montage des elektronischen Moduls in der Trägerstruktur erfolgt, wobei der zweite Teil und das zweite Element angeordnet sind, sodass dieser zweite Teil oder/und dieses zweite Element eine elastische Verformung erfahren kann/können, die es ermöglicht, sie lösbar zusammenzubauen, indem durch Druck das zweite Element in den zweiten Teil, oder der zweite Teil in das zweite Element eingeführt wird.

3. Uhrmachereistück nach Anspruch 1 oder 2, **dadurch gekennzeichnet, dass** das Gelenk oder/und das Befestigungssystem angeordnet ist/sind, um eine axiale Position zu bestimmen, in der das elektronische Modul (26) in der Höhe positioniert ist, sobald das Gelenk gebildet ist, und dann durch das Befestigungssystem in der zweiten Winkelposition blockiert wird.

4. Uhrmachereistück nach einem der vorstehenden Ansprüche, **dadurch gekennzeichnet, dass**, sobald das Gelenk gebildet, und danach durch das Befestigungssystem in der zweiten Winkelposition blockiert worden ist, eine axiale Endposition der beiden Spulen (53, 54) durch eine zusätzliche Befestigungsvorrichtung gewährleistet wird, die vorgesehen ist, um das elektronische Modul an der Trägerstruktur zu befestigen.

5. Verfahren zum Montieren des Uhrmachereistücks (2) nach einem der vorstehenden Ansprüche, wobei das Verfahren die folgenden aufeinanderfolgenden Schritte umfasst, um das elektronische Modul seitlich in der Trägerstruktur zu montieren, um den Generator zu bilden:
- teilweise seitliches Einführen des Elektronikmoduls (26) in die Trägerstruktur, sodass ein Teil des Elektronikmoduls, der vom ersten Teil entfernt ist, einer Rotorwelle ausweicht, indem er seitlich an dieser Welle vorbeiläuft;
- Zusammenbauen des ersten Teils der Stütze und des ersten Elements der Trägerstruktur, um das Gelenk zu bilden;
- Drehen des elektronischen Moduls um eine Drehachse (74), die durch das Gelenk definiert wird, und parallel zu einer Drehachse (72) des Rotors verläuft, aus einer ersten Winkelposition, in der sich dieses elektronische Modul direkt nach dem Bilden des Gelenks befindet, in eine zweite Winkelposition, um sich mindestens einer der beiden Spulen der Drehachse des Rotors anzunähern, sodass sich diese beiden Spulen in der zweiten Position jeweils in einer Funktionsposition in im Wesentlichen demselben Abstand von der Drehachse des Rotors befinden;
- Befestigen des elektronischen Moduls durch ein Befestigungssystem, das angeordnet ist, um das Gelenk in der zweiten Winkelposition blockieren zu können, und dieses elektronische Modul somit in dieser zweiten Winkelposition zu halten.

6. Verfahren nach Anspruch 5, **dadurch gekennzeichnet, dass** der erste Teil (58) und das erste Element (30) zusammengebaut werden, indem der erste Teil seitlich durch Druck in das erste Element, oder das erste Element in den ersten Teil eingeführt wird, um das Gelenk zu bilden, wobei der erste Teil oder/und das erste Element eine elastische Verformungsfähigkeit aufweist/aufweisen, die es ermöglicht, sie durch Druck lösbar zusammenzubauen.

7. Verfahren nach Anspruch 5 oder 6, **dadurch gekennzeichnet, dass** das Befestigungssystem durch einen zweiten Teil (60) der Stütze (50) und ein zweites Element (32) der Trägerstruktur (22) gebildet wird, die durch einen auf das elektronische Modul (26) ausgeübten Druck bei der Drehung dieses elektronischen Moduls um die durch das Gelenk definierte Drehachse (74) in Richtung der zweiten Winkelposition zusammengebaut werden, wobei der zweite Teil und das zweite Element angeordnet sind, sodass dieser zweite Teil oder/und dieses zweite Element eine elastische Verformung erfahren kann/können, die es ermöglicht, sie lösbar zusammenzubauen, indem durch Druck das zweite Element in den zweiten Teil oder der zweite Teil in das zweite Element eingeführt wird.

8. Verfahren nach einem der Ansprüche 5 bis 7, **dadurch gekennzeichnet, dass**, sobald das Gelenk gebildet, und danach durch das Befestigungssystem in der zweiten Winkelposition blockiert worden ist, eine axiale Endposition des elektronischen Moduls (26) durch eine zusätzliche Vorrichtung zur Befestigung dieses elektronischen Moduls an der Trägerstruktur gewährleistet wird.

## Claims

1. A timepiece (2) comprising a supporting structure (22) and a generator (24) formed of a rotor (38), provided with at least one magnet (40) and mounted to pivot in the supporting structure, and of a stator composed of two coils (52, 54) and forming, with an electronic circuit (56), an electronic module (26) which is arranged so as to be able to be mounted in the supporting structure after mounting the supporting structure with the rotor pivoted therein; the electronic module comprising a support (50) for the two coils having a first part (58) forming an articulation with a first element (30) of the supporting structure, the first part and the first element being arranged so that this first part or/and this first element can undergo an elastic deformation allowing them to be assembled, in a removable manner, to form said articulation by laterally introducing, by pressure, the first part into the first element or the first element into the first part; the timepiece being arranged so that, during a lateral mounting of the electronic module in the supporting structure preassembled with the rotor, the first part and the first element can be assembled to form said articulation, which then allows a rotation of the electronic module (26), around an axis of rotation (74) defined by this articulation and parallel to an axis of rotation (72) of the rotor, from a first angular position, wherein this electronic module is located directly after forming the articulation, to a second angular position to bring at least one of the two coils closer to the axis of rotation of the rotor, so that these two coils are each located in a functional position substantially at the same distance from the axis of rotation of the rotor, the electronic module being held in the second angular position by a fastening system (32, 60, 70) which is arranged to be able to block the articulation in this second angular position.

2. The timepiece according to claim 1, **characterised in that** said fastening system is formed by a second part (60) of said support and a second element (32) of said supporting structure (22) which are arranged to be able to be assembled by a pressure applied to the electronic module (26) during a rotation of this electronic module, around said axis of rotation defined by the articulation and in the direction of said second angular position, occurring during the lateral mounting of the electronic module in the supporting structure, said second part and said second element being arranged so that this second part or/and this second element can undergo an elastic deformation allowing them to be assembled, in a removable manner, by introducing, by pressure, the second element into the second part or the second part into the second element.

3. The timepiece according to claim 1 or 2, **characterised in that** said articulation or/and said fastening system is/are arranged so as to determine an axial position wherein the electronic module (26) is positioned in height, once the articulation has been formed and then blocked in the second angular position by the fastening system.

4. The timepiece according to any one of claims 1 to 3, **characterised in that**, once the articulation has been formed and then blocked in the second angular position by the fastening system, a final axial position of the two coils (53, 54) is provided by an additional fastening device designed to fasten the electronic module to the supporting structure.

5. A method for mounting the timepiece (2) according to any of the preceding claims, the method comprising the following successive steps for laterally mounting the electronic module in the supporting structure so as to form the generator:
- partial lateral introduction of the electronic module (26) into the supporting structure so that a part of the electronic module, remote from the first part, avoids a rotor shaft by passing over the side of this shaft;
- assembly of the first part of the support and the first element of the supporting structure to form the articulation;
- rotation of the electronic module, around an axis of rotation (74) defined by the articulation and parallel to an axis of rotation (72) of the rotor, from a first angular position, wherein this electronic module is located directly after forming the articulation, to a second angular position to bring at least one of the two coils closer to the axis of rotation of the rotor, so that these two coils are, in the second position, each located in a functional position substantially at the same distance from the axis of rotation of the rotor;
- fastening of the electronic module by a fastening system which is arranged to be able to block the articulation in the second angular position and thus maintain this electronic module in this second angular position.

6. The method according to claim 5, **characterised in that** said first part (58) and said first element (30) are assembled by laterally introducing, by pressure, the first element into the first part or the first part into the first element so as to form said articulation, the first part or/and the first element having an elastic deformation capacity allowing them to be assembled by pressure in a removable manner.

7. The method according to claim 5 or 6, **characterised in that** the fastening system is formed by a second part (60) of said support (50) and a second element (32) of said supporting structure (22) which are assembled by a pressure applied to the electronic module (26) during rotation of this electronic module, around said axis of rotation (74) defined by the articulation, in the direction of said second angular position, the second part and the second element being arranged so that this second part or/and this second element can undergo an elastic deformation allowing them to be assembled, in a removable manner, by introducing, by pressure, the second element into the second part or the second part into the second element.

8. The method according to any one of claims 5 to 7, **characterised in that**, once the articulation has been formed and then blocked in the second angular position by the fastening system, a final axial position of the electronic module (26) is provided by an additional device for fastening this electronic module to the supporting structure.
